# EUROPÄISCHE PATENTSCHRIFT

(11) **EP 3 643 893 B1**
(45) Veröffentlichungstag und Bekanntmachung des Hinweises auf die Patenterteilung: **14.06.2023**
(21) Anmeldenummer: 19204223.2
(22) Anmeldetag: 21.10.2019
(51) Int. Cl.: F01N 3/20

(54) **VORRICHTUNG ZUR LAGERUNG UND BEREITSTELLUNG EINES BETRIEBSMITTELS EINES KRAFTFAHRZEUGS**
DEVICE FOR STORING AND PROVIDING AN OPERATING MEANS OF A MOTOR VEHICLE
DISPOSITIF DE STOCKAGE ET DE FOURNITURE D'UN AGENT DE FONCTIONNEMENT D'UN VÉHICULE AUTOMOBILE

(30) Priorität: 26.10.2018 DE 102018126737
(43) Veröffentlichungstag der Anmeldung: 29.04.2020
(73) Patentinhaber: MAN Truck & Bus SE, 80995 München (DE)
(72) Erfinder: Pallauf, Andreas, 81735 München (DE); Wiegert, Andreas, 85757 Karlsfeld (DE)
(74) Vertreter: v. Bezold & Partner Patentanwälte - PartG mbB

(56) Entgegenhaltungen:
- EP-A2- 2 080 874
- EP-A2- 2 199 556
- DE-A1- 2 540 496
- DE-A1-102008 000 549

## Beschreibung

Die Erfindung betrifft eine Vorrichtung zur Lagerung und Bereitstellung eines Betriebsmittels eines Kraftfahrzeugs, vorzugsweise eine Vorrichtung zur Lagerung und Bereitstellung einer Flüssigkeit zur Abgasnachbehandlung und/oder einer Flüssigkeit zur Reduktion von Emissionen bei Verbrennungsprozessen. Ferner betrifft die Erfindung ein Kraftfahrzeug, das eine derartige Vorrichtung umfasst.

Bereits seit mehreren Jahren ist im Stand der Technik bekannt, die Stickoxidemissionen von Verbrennungsmotoren, insbesondere die von Dieselmotoren, mittels sogenannter SCR-Katalysatoren zu reduzieren. Hierzu wird dem Abgasstrom Harnstofflösung beigemischt, die anschließend im Katalysator mit den im Abgas enthaltenen Stickstoffoxiden reagiert. Die hierbei üblicherweise verwendete Harnstofflösung besitzt jedoch die Eigenschaft, bei Temperaturen unterhalb von -11 °C zu gefrieren, weshalb bei einem Einsatz dieser Technologie in Kraftfahrzeugen eine zusätzliche Isolierung bzw. Beheizung des Vorratstanks der Harnstofflösung notwendig wird. Im Stand der Technik sind deshalb eine Reihe von Harnstofflösungstanks mit integrierten Heizungssystemen bekannt, wobei hier beispielhaft auf die Offenlegungsschrift DE 103 37 572 A1 verwiesen sei.

Des Weiteren ist aus der DE 10 2008 000 549 A1 eine Abgasreinigungsvorrichtung bekannt, bei der Ammoniak aus in einem Tank enthaltenem Harnstoffwasser ausgebildet und in ein Abgasrohr eingespritzt wird. Das in dem Tank enthaltene Harnstoffwasser wird dabei durch eine Rührvorrichtung gerührt, um dessen Temperatur und Dichte in dem Tank gleichmäßig zu machen, wodurch ein teilweises Gefrieren des Harnstoffwassers in dem Tank verhindert wird. Das Harnstoffwasser kann zusätzlich zu dem Rühren von diesem erwärmt werden, wodurch ein Gefrieren des Harnstoffwassers sicher verhindert werden soll.

Ferner offenbart die EP 2 080 874 A1 ein Tankentnahmesystem für einen Fahrzeugtank, der mit einer gefrorenen Flüssigkeit gefüllt ist. Das Tankentnahmesystem weist dabei ein Heizsystem auf, das wenigstens ein elektrisches Heizelement als primäre Heizvorrichtung umfasst. Ferner weist das Tankentnahmesystem ein Leitungssystem auf, das wenigstens eine Entnahmeleitung mit einer im Fahrzeugtank angeordneten Entnahmeöffnung aufweist, wobei ein sich um die Entnahmeöffnung erstreckendes Kaltstartvolumen der gefrorenen Flüssigkeit durch die primäre Heizvorrichtung abschmelzbar ist. Um hierbei ein Kaltstartvolumen möglichst zügig und die restliche gefrorene Flüssigkeit möglichst energiesparend abzuschmelzen, ist weiterhin vorgesehen, dass das Heizsystem eine mit einem Heizfluid gespeiste sekundäre Heizvorrichtung und das Leitungssystem wenigstens eine vom Heizfluid durchströmbare, in der Flüssigkeit im Fahrzeugtank angeordnete Heizleitung aufweist und dass die Heizleitung mit der Entnahmeleitung flüssigkeitsleitend verbunden und die abgeschmolzene Flüssigkeit durch die Entnahmeleitung der Heizleitung als Heizfluid zuführbar ist.

Aus der DE 25 40 496 A1 ist ein Kraftstoffbehälter für eine mit einem Benzin-Methanol-Gemisch als Kraftstoff betriebene Brennkraftmaschine bekannt, wobei Mittel zum Umwälzen des in dem Behälter enthaltenen Kraftstoffgemisches vorgesehen sind.

Die EP 2 199 556 A2 offenbart ein Harnstoff-Lagersystem mit einem Vorratsbehälter für eine Harnstofflösung. Das System umfasst dabei ein beheiztes Reservoir, einen Kanal, der den Vorratstank mit dem beheizten Reservoir verbindet, und eine Pumpe zum Ansaugen von Harnstoff aus dem beheizten Reservoir. Zudem ist eine zweite Pumpe mit einem Aktuator aus einem Metall mit Gedächtnisform zum Ansaugen von Harnstoff aus dem Vorratstank in den beheizten Behälter vorgesehen.

Ferner wurde festgestellt, dass sich - gerade im Fall der üblichen Beheizung und Entnahme am Tankboden - während des Auftauvorgangs zwischen der bereits verflüssigten Schicht und der noch gefrorenen Schicht eine gasförmige Phase ausbilden kann, eine sog. Eishöhle, welche durch ihre isolierende Wirkung die Wärmeleitung und damit das Auftauverhalten behindern kann. Zur Umgehung dieses Problems schlägt die Offenlegungsschrift DE 10 2007 041 524 A1 eine Entnahme "von oben" mittels einer speziellen Schwimmheizung vor, die zudem eine von der Förderleitung abzweigenden Rücklaufleitung vorsieht, mittels der warmes Reduktionsmittel gezielt auf die anzutauende Eisfront gerichtet wird, um so den Auftauvorgang zu beschleunigen.

Nachteilig ist jedoch, zur Unterstützung des Auftauvorgangs einen Volumenstrom aus der Förderleitung abzuzweigen. Besonders in den Fällen, in welchen ein maximaler Volumenstrom gefördert werden soll und entsprechend viel Betriebsmittel aufgetaut werden muss, kann mit der vorgeschlagenen Lösung ein ausreichender Betriebsmittelstrom am Rücklauf nicht sichergestellt werden, so dass ein zuverlässigen Auftauen des Betriebsmittels nicht gewährleistet werden kann.

Es ist somit eine Aufgabe der Erfindung einen verbesserten Ansatz für eine zuverlässige Betriebsmittelentnahme bereitzustellen, mit dem Nachteile der herkömmlichen Techniken vermieden werden können. Insbesondere soll eine ausreichende Versorgung mit flüssigem Betriebsmittel auch bei tiefen Temperaturen aus dem Tank gewährleistet werden. Ferner ist eine Aufgabe der Erfindung eine verbesserte Möglichkeit bereitzustellen, in den Tank eingebrachte Wärme in dessen Innenraum besser zu verteilen und so ein schnelles Auftauen des eventuell gefrorenen Betriebsmittels zu erreichen.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Vorrichtung zur Lagerung und Bereitstellung eines Betriebsmittels eines Kraftfahrzeugs umfasst - in an sich bekannter Weise - einen Behälter zur Lagerung des Betriebsmittels, vorzugsweise einen Flüssigkeitstank, eine Heizeinrichtung zum Erwärmen des Betriebsmittels und eine Entnahmeeinrichtung, umfassend eine Entnahmeleitung und eine Förderpumpe zur Förderung des Betriebsmittels aus dem Behälter über die Entnahmeleitung. Die Förderpumpe kann dabei sowohl außerhalb als auch innerhalb des Behälters angeordnet sein. Bei dem Betriebsmittel handelt es sich vorzugsweise um eine Flüssigkeit zur Abgasnachbehandlung, beispielsweise wässrige Harnstofflösung oder Ammoniak, allerdings kann die Vorrichtung auch zur Lagerung und Bereitstellung von Wasser, Kühlmittel oder sonstigen Fluiden verwendet werden, deren Gefrierpunkt bei Normaldruck vorzugsweise im Temperaturbereich zwischen -50° bis +35 °C liegt, weiter vorzugsweise zwischen -25° bis +35 °C liegt. Beispielweise kann es sich bei dem Betriebsmittel um eine Flüssigkeit zur Reduktion von Emissionen bei Verbrennungsprozessen handeln, wozu die Flüssigkeit vorzugsweise dem Kraftstoff und/oder Frischluft vor dem eigentlichen Verbrennungsprozess zugemischt wird.

Um auf vorteilhafte Weise die von der Heizeinrichtung erzeugte Wärme im Behälter zu verteilen und so ein schnelles Auftauen von eventuell gefrorenen Betriebsmittel im Behälter zu ermöglichen, umfasst die Vorrichtung erfindungsgemäß zusätzliche eine Strömungsmaschine, die ausgebildet ist, bei deren Betrieb einen, vorzugsweise gerichteten, Volumenstrom des Betriebsmittels im Inneren des Behälters zu erzeugen. Als Strömungsmaschine kann hierbei eine Einrichtung verstanden werden, die ein Fluid in Bewegung setzen bzw. Strömungsenergie aus anderen Energieformen erzeugen kann. Beispielsweise kann die beanspruchte Vorrichtung eine Strömungsmaschine in Form einer Turbine, eine Kreiselpumpe oder eines Propellers umfassen. Durch die Strömungsmaschine wird auf vorteilhafte Weise ein Auftauen des gefrorenen Betriebsmittels unterstützt, da ein Strom flüssiges und vorzugsweise erwärmtes Betriebsmittel auf einen Bereich mit noch gefrorenen Betriebsmittel gelenkt werden kann. Zudem kann durch die von der Strömungsmaschine erzeugten Verwirbelungen in der flüssigen Phase die in den Tank eingebrachte Wärme homogener in dessen Innenraum verteilt werden.

Gemäß einem besonders vorteilhaften Aspekt können die Förderpumpe und die Strömungsmaschine unabhängig voneinander betreibbar sein. Mit anderen Worten kann der Betrieb der Förderpumpe, d.h. die Erzeugung eines Volumenstroms des Betriebsmittels, unabhängig vom Betrieb der Strömungsmaschine erfolgen. Im Speziellen kann der Betrieb der Förderpumpe auch bei ausgeschalteter bzw. deaktivierter Strömungsmaschine oder umgekehrt erfolgen. Durch den unabhängigen Betrieb dieser beiden Bauteile kann auf vorteilhafte Weise ein Auftauen des Betriebsmittels bereits vor der tatsächlichen Entnahme erreicht werden. Ferner kann auf diese Weise auch nach dem Auftauen des gesamten Betriebsmittels die Energie für den Betrieb der nun nicht mehr benötigten Strömungsmaschine eingespart werden. Der Aspekt, dass die Förderpumpe und die Strömungsmaschine somit unabhängig voneinander betreibbar sind, schließt hierbei allerdings nicht aus, dass auch Betriebsmodi existieren können, in welchen beide Bauteile simultan betrieben werden. Mit andern Worten können die Förderpumpe und die Strömungsmaschine auch abhängig voneinander und/oder gleichzeitig betreibbar sein.

Erfindungsgemäß weist der Behälter ferner einen ersten Teilbereich auf. Der erste Teilbereich ist vorzugsweise angrenzend und/oder benachbart zur Heizeinrichtung angeordnet. Des Weiteren weist der Behälter mindestens einen zweiten Teilbereich auf, der weiter entfernt von der Heizeinrichtung, oder zumindest von dem im Inneren des Behälters angeordneten Teils der Heizeinrichtung, als der erste Teilbereich angeordnet ist. Die Strömungsmaschine ist derart ausgebildet, dass ein Volumenstrom des Betriebsmittels vom ersten zum zweiten Teilbereich erzeugbar ist. Mit anderen Worten kann durch die Strömungsmaschine ein Volumenstrom des Betriebsmittels erzeugt werden, der von der Heizeinrichtung, oder zumindest von dem im Innen des Behälters angeordneten Teils der Heizeinrichtung, weggerichtet ist. Dies ist für eine schnelle Verteilung der in den Behälter eingebrachten Wärme vorteilhaft, da beim Auftauprozess gerade im Bereich der Heizeinrichtung, oder zumindest von dem im Innen des Behälters angeordneten Teils der Heizeinrichtung, baldmöglichst flüssiges Betriebsmittel entsteht und bereits verflüssigtes Betriebsmittel gerade dort die höchste Temperatur besitzt. Ferner kann der Volumenstrom dabei auch ein Strahl, d.h. ein im Wesentlichen in eine Richtung bewegter Volumenstrom, sein.

Erfindungsgemäß ist die Strömungsmaschine derart ausgebildet, dass ein Volumenstrom des Betriebsmittels vom ersten zum zweiten Teilbereich erzeugt wird, wenn das Betriebsmittel im ersten Teilbereich in einem flüssigen Aggregatzustand und das Betriebsmittel im zweiten Teilbereich zumindest teilweise in einem gefrorenem Zustand vorliegt. Falls somit in einem Teil des Behälters gefrorenes Betriebsmittel vorliegt, kann die Strömungsmaschine einen Volumenstrom aus flüssigen und vorzugsweise warmen oder erwärmten Betriebsmittel aus der Umgebung der Heizeinrichtung zum Ort der Eisphase leiten, um dort den Auftauvorgang zu beschleunigen. Diese Bedingung stellt dabei auf vorteilhafte Weise sicher, dass auch bei tiefen Temperaturen eine zuverlässige Entnahme von flüssigen Betriebsmittel möglich ist. Ist diese Bedingung nicht mehr gegeben, beispielsweise weil das gesamte Betriebsmittel in flüssiger Form vorliegt, kann die Strömungsmaschine zudem ausgebildet sein, die Erzeugung des Volumenstroms des Betriebsmittels vom ersten zum zweiten Teilbereich zu beenden.

Gemäß einem weiteren Aspekt der Erfindung kann der Betrieb der Strömungsmaschine an eine Aktivierungsbedingung und/oder Deaktivierungsbedingung gekoppelt sein. Dabei wird die Strömungsmaschine bei Erfüllung einer Aktivierungsbedingung eingeschaltet, wobei die Aktivierungsbedingung dann erfüllt ist, wenn das Betriebsmittel im Behälter zumindest teilweise gefroren ist. Zudem oder alternativ kann die Strömungsmaschine bei Erfüllung einer Deaktivierungsbedingung abgeschaltet werden, wobei die Deaktivierungsbedingung dann erfüllt ist, wenn das Betriebsmittel im Behälter nicht mehr in einem gefrorenem Zustand vorliegt. Neben dem Knüpfen der Aktivierungs- bzw. Deaktivierungsbedingung an einen bestimmten Aggregatszustand des Betriebsmittels, kann die Aktivierungs- bzw. Deaktivierungsbedingung auch unabhängig vom aktuellen Aggregatszustand des Betriebsmittels erfüllt sein. Beispielweise kann die Aktivierungs- und/oder Deaktivierungsbedingung auch durch eine Eingabe eines Nutzers, eine Umgebungsbedingung, z. B. ein Über- oder Unterschreiten einer bestimmten Außentemperatur, und/oder einer Fahrzeugbedingung, z. B. einem An- bzw. Ausschalten einer Zündung des Kraftfahrzeugs, erfüllt werden. Der Begriff "eingeschaltet" kann in diesem Zusammenhang so verstanden werden, dass die Strömungsmaschine in diesem Zustand ein Fluid in Bewegung setzt bzw. Strömungsenergie aus anderen Energieformen erzeugt, wobei dies im "ausgeschalteten" Zustand gerade nicht der Fall ist. Der Vorteil der Verwendung einer Aktivierungs- bzw. Deaktivierungsbedingung für den Betrieb der Strömungsmaschine liegt darin, dass damit definierte Vorschriften für das Betriebsverhalten der Strömungsmaschine angegeben werden können.

Nach einer Weiterbildung kann die Aktivierungsbedingung und/oder Deaktivierungsbedingung dabei vom Wert eines Parameters abhängen, aus dem eine Temperatur und/oder der Aggregatzustand des Betriebsmittels ableitbar ist. Beispielsweise kann die Aktivierungsbedingung und/oder Deaktivierungsbedingung von einem Temperaturwert, einem Leitfähigkeitswert, einem Brechungsindexwert oder einem Wert einer anderen Größe des Betriebsmittels, der sich mit dessen Aggregatzustand ändert, abhängen. Auf vorteilhafte Weise wird so die Zuverlässigkeit der Aktivierung bzw. Deaktivierung der Strömungsmaschine erhöht.

Erfindungsgemäß umfasst die Vorrichtung eine Sensoreinrichtung zum Erfassen der Temperatur des Betriebsmittels. Ferner kann die Vorrichtung nach einem weiteren Aspekt zusätzlich mindestens eine der folgenden Sensoreinrichtungen umfassen: eine Sensoreinrichtung zum Erfassen des Brechungsindex des Betriebsmittels, eine Sensoreinrichtung zum Erfassen der Leitfähigkeit des Betriebsmittels, eine Sensoreinrichtung zum Erfassen der Harnstoff-Konzentration des Betriebsmittels sowie eine Sensoreinrichtung zum Erfassen des Füllstands des Betriebsmittels im Behälter. Auf vorteilhafte Weise kann so der von der Sensoreinrichtung erfasste Parameterwert zur Aktivierung und/oder Deaktivierung der Strömungsmaschine verwendet werden.

Nach einer Weiterbildung dieses Aspekts der Erfindung kann die mindestens eine Sensoreinrichtung dabei in die Entnahmeeinrichtung, beispielsweise in der Förderpumpe, oder in die Strömungsmaschine integriert sein. Anders ausgedrückt kann die mindestens eine Sensoreinrichtung als ein Teil der Entnahmeeinrichtung oder der Strömungsmaschine ausgebildet sein. Hierzu kann die Sensoreinrichtung mit der Entnahmeeinrichtung oder Strömungsmaschine fest verbunden sein und/oder die Bauteile können von einem gemeinsamen Gehäuse umhaust werden. Falls mehrere Sensoreinrichtungen vorhanden sind, kann ein Teil der Sensoreinrichtungen in die Entnahmeeinrichtung integriert sein und/oder ein Teil der Sensoreinrichtungen in die Strömungsmaschine integriert sein. Durch eine derartige Ausbildung als eine gemeinsame Baugruppe lässt sich auf vorteilhafte Weise der vorhandene Bauraum optimal nutzen.

Um den von der Strömungsmaschine erzeugten Betriebsmittelstrom zu regulieren, umfasst die erfindungsgemäße Vorrichtung zusätzlich eine Steuereinrichtung, die ausgebildet ist, den von der Strömungsmaschine erzeugten Volumenstrom des Betriebsmittels auf Basis von der(den) Sensoreinrichtung(en) erfassten Werte zu steuern. Auf diese Weise kann beispielsweise zu Beginn des Abtauvorgangs ein hoher Volumenstrom eingestellt werden, während in einem Zustand, in dem bereits das meiste Betriebsmittel in flüssiger Form vorliegt, der Volumenstrom, um Energie einzusparen, reduziert werden kann. Ferner kann auch in einem Zustand, in dem sich ausschließlich flüssiges Betriebsmittel im Tank befindet, weiterhin ein geringer Volumenstrom aufrecht erhalten werden, um so für eine ständige Durchmischung und homogene Konzentration des Betriebsmittels im Tank zu sorgen. Damit stellt die Variabilität des von der Strömungsmaschine erzeugten Betriebsmittelstroms auf vorteilhafte Weise sicher, dass zu jedem Zeitpunkt der Betrieb der Strömungsmaschine an die gerade vorherrschenden Umgebungsbedingungen angepasst werden kann.

Weiterhin soll die Entnahmeeinrichtung in einer vorbestimmten Einbauposition des Behälters in einem unteren Drittel, vorzugsweise an der geodätisch tiefsten Stelle, des Behälters angeordnet sein. Nach einem weiteren Aspekt der Erfindung kann auch die Heizeinrichtung in einer vorbestimmten Einbauposition des Behälters in einem unteren Drittel, vorzugsweise an der geodätisch tiefsten Stelle, des Behälters angeordnet sein. Dies stellt auf vorteilhafte Weise sicher, dass genügend flüssiges Betriebsmittel entnommen werden kann, welches sich schwerkraftbedingt vorzugsweise in einem unteren Bereich des Behälters sammelt. Die Begriffe "oben" und "unten" sowie Abwandlungen davon sind dabei auf die Orientierung bezüglich der Schwerkraftrichtung bezogen. Ferner soll der Begriff "vorbestimmte Einbauposition" hierbei diejenige Behälterorientierung angeben, die der Behälter während dessen Gebrauch, d.h. während der Entnahme von Betriebsmittel aus diesem und/oder in einem im Fahrzeug eingebauten Zustand, üblicherweise aufweist. Die vorbestimmte Einbauposition kann dabei durch die Behälterform und/oder Position der Anschlüsse vorgegeben sein.

Nach einer Weiterbildung der Erfindung ist der von der Strömungsmaschine erzeugte Volumenstrom des Betriebsmittels dabei im Wesentlichen entgegen der Schwerkraftrichtung orientiert. Mit anderen Worten ist der von der Strömungsmaschine erzeugte Volumenstrom des Betriebsmittels in einer vorbestimmten Einbauposition des Behälters im Wesentlichen von unten nach oben gerichtet. Die Richtung des Volumenstroms des Betriebsmittels kann auch von schräg unten nach schräg oben gerichtet sein und dabei entgegen der Schwerkraftrichtung lediglich beispielsweise einen Winkel zwischen 0 und 45° einnehmen. Dadurch wird auf vorteilhafte Weise auch ein schnelles Abtauen der von der Heizeinrichtung weit entfernten Bereiche sichergestellt.

Gemäß eines weiteren Aspekts der Erfindung umfasst die Strömungsmaschine eine im Inneren des Behälters angeordnete Eingangsöffnung zum Zuführen des Betriebsmittels, eine im Inneren des Behälters angeordnete Ausgangsöffnung zum Abgeben des Betriebsmittels und eine Pumpe zum Transport des Betriebsmittels von der Eingangsöffnung zur Ausgangsöffnung. Sowohl die Eingangs- wie auch Ausgangsöffnung können dabei einer Fluidleitung zugeordnet sein. Der Vorteil dieses Aspekts liegt darin, dass dadurch sehr lokal flüssiges und vorzugsweise warmes Betriebsmittel, beispielsweise aus der Umgebung der Heizeinrichtung, über die Eingangsöffnung der Strömungsmaschine zugeführt werden kann und stark gerichtet an der Ausgangsöffnung wieder abgegeben werden kann. Weiterhin kann die Strömungsmaschine auch ein die Pumpe umgebendes Gehäuse umfassen, in dem die entsprechenden Eingangs- und Ausgangsöffnungen vorgesehen sind. Alternativ kann die Strömungsmaschine aber auch gehäuselos ausgeführt sein.

Gemäß einer Weiterbildung der Erfindung ist die Ausgangsöffnung der Strömungsmaschine dabei als Düse ausgebildet. Unter dem Begriff Düse kann hierbei eine sich im Wesentlichen kontinuierlich verengende Querschnittsveränderung verstanden werden, mittels der die Fließgeschwindigkeit des Betriebsmittels erhöht werden kann. Dadurch kann durch die Düse der Strömungsmaschine auf vorteilhafte Weise ein Betriebsmittelstrahl erzeugt werden, der gezielt in Richtung der gefrorenen Bereiche gerichtet werden kann.

Zudem oder alternativ kann die Eingangsöffnung benachbart zur Heizeinrichtung angeordnet sein. Vorzugsweise ist die Eingangsöffnung dabei weniger als 10 cm, weiter vorzugsweise weniger als 5cm beabstandet zur Heizeinrichtung oder zumindest von der im Innern des Behälters angeordneten Teils der Heizeinrichtung angeordnet. Mit anderen Worten erfolgt die Zufuhr von Betriebsmittel an die Strömungsmaschine aus der Umgebung der Heizeinrichtung. Dies ist für eine schnelle Verteilung der in den Behälter eingebrachten Wärme vorteilhaft, da beim Auftauprozess gerade im Bereich der Heizeinrichtung baldmöglichst flüssiges Betriebsmittel entsteht sowie bereits verflüssigtes Betriebsmittel dort die höchste Temperatur besitzt.

Zudem oder alternativ kann die Pumpe der Strömungsmaschine zum Transport des Betriebsmittels im Inneren oder außerhalb des Behälters angeordnet sein. Dies ermöglicht auf vorteilhafte Weise eine flexible Ausgestaltung der Vorrichtung je nach vorhandenen Bauraum. Dabei kann die Pumpe beispielsweise als Membran-, Rotationskolben- oder Impellerpumpe ausgeführt sein.

Nach einem weiteren Aspekt der Erfindung kann die, vorzugsweise im Inneren des Behälters angeordnete, Strömungsmaschine mindestens eines der folgenden Bauteile umfassen: ein Rotorblatt, einen Flügel, eine Schaufel und ein Rührwerk. Diese Bauteile können dabei sowohl als eine Komponente einer Pumpe ausgebildet sein, d.h. zusätzlich noch von einem ring- oder röhrenförmigen Gehäuse umschlossen werden, oder als freistehendes Bauteil ausgebildet sein. Letzteres ist besonders vorteilhaft um mit wenigen Bauteilen und damit auf kostengünstige Weise einen Volumenstrom des Betriebsmittels im Inneren des Behälters zu erzeugen.

Um eine möglichst gleichbleibende Konsistenz des aus dem Behälter entnommenen Betriebsmittels sicherzustellen, kann gemäß einem weiteren Aspekt der Erfindung die Strömungsmaschine derart ausgelegt und angeordnet sein, dass durch ihren Betrieb eine im Wesentlichen homogene Konzentrationsverteilung des, vorzugsweise flüssigen, Betriebsmittels im Behälter einstellbar ist. Hierzu kann eine Auslegung und/oder eine Anordnung der Strömungsmaschine, vorzugsweise in Abhängigkeit der Behälterform, derart gewählt werden, dass eine möglichst gleichmäßige Umwälzung bzw. Durchmischung des Betriebsmittels im Behälter sichergestellt wird, wodurch lokale Konzentrationsunterschiede möglichst ausgeglichen werden. Hierfür kann die Auslegung, z. B. Dimensionierung, und/oder die Anordnung der Strömungsmaschine mittels Versuchen bzw. Experimenten ermittelt werden. Auf vorteilhafte Weise können so Konzentrationsschwankungen bei dem entnommenen Betriebsmittels vermieden werden, was wiederum die Zuverlässigkeit der Abgasnachbehandlung bzw. der nachgeschalteten Prozesse erhöht.

Gemäß eines weiteren Aspekts der Erfindung können die Strömungsmaschine und die Entnahmeeinrichtung als gemeinsame Baugruppe ausgebildet sein. Das heißt, dass die Strömungsmaschine in die Entnahmeeinrichtung integriert sein kann und/oder dass die Strömungsmaschine als ein Teil der Entnahmeeinrichtung ausgebildet sein kann. Umgekehrt kann auch die Entnahmeeinrichtung in die Strömungsmaschine integriert und/oder als ein Teil der Strömungsmaschine ausgebildet sein. Ferner kann die Strömungsmaschine mit der Entnahmeeinrichtung fest verbunden sein und/oder beide Bauteile können von einem gemeinsamen Gehäuse umhaust werden. Durch eine derartige Ausbildung als eine gemeinsame Baugruppe lässt sich auf vorteilhafte Weise der vorhandene Bauraum optimal nutzen. Alternativ können die Strömungsmaschine und die Entnahmeeinrichtung aber auch als unabhängige Baugruppen ausgebildet sein.

Nach einem weiteren Aspekt der Erfindung kann die Heizeinrichtung ein elektrisches Heizelement umfassen. Der Vorteil dieser Variante liegt darin, dass die Heizeinrichtung dadurch nicht auf die Wärmeabgabe eines laufenden Motors, beispielsweise eine Kraftfahrzeugs, angewiesen ist. Beispielsweise lässt sich so eine Standheizung des Behälters vor der eigentlichen Inbetriebnahme realisieren.

Zudem oder alternativ kann die Heizeinrichtung einen Wärmetauscher umfassen, der von einem Wärmemedium durchströmbar ist und in Fluidverbindung mit einer Wärmequelle steht, die ausgebildet ist, das Wärmemedium außerhalb des Behälters zu erwärmen. Beispielsweise kann dabei Kühlmittel, Motoröl, Getriebeöl oder Abgas eines Kraftfahrzeugs als Wärmequelle verwendet werden. Der Vorteil dieser Variante liegt darin, dass so ansonsten ungenutzt abgegebene Wärme auf kostengünstige Weise zum Erwärmen des Betriebsmittels verwendet wird.

Vorstehend wurde eine Vorrichtung zur Lagerung und Bereitstellung eines Betriebsmittels eines Kraftfahrzeugs beschrieben, wobei die Vorrichtung eine Heizeinrichtung zum Erwärmen des Betriebsmittels umfasst. Gemäß einem weiteren allgemeinen Aspekt der Erfindung wird zudem auch eine Vorrichtung zur Lagerung und Bereitstellung eines Betriebsmittels eines Kraftfahrzeugs beansprucht, die keine derartige Heizeinrichtung umfasst, jedoch ansonsten alle vorstehenden Merkmale dieser Vorrichtung aufweisen kann. Insbesondere für den Fall, dass das Betriebsmittel selbst bzw. durch Zugabe von Additiven einen niedrigen Gefrierpunkt, z. B. unter -25 °C bzw. besonders bevorzugt unter -50 °C, aufweist, der unter normalen Betriebsbedingungen der Vorrichtung nicht erreicht wird, kann so auf vorteilhafte Weise eine und damit eine kostengünstigere Lösung mit weniger Bauteilen bereitgestellt werden. Im Detail, wird gemäß diesem weiteren allgemeinen Aspekt eine Vorrichtung zur Lagerung und Bereitstellung eines Betriebsmittels eines Kraftfahrzeugs, vorzugsweise zur Lagerung und Bereitstellung einer Flüssigkeit zur Abgasnachbehandlung und/oder einer Flüssigkeit zur Reduktion von Emissionen bei Verbrennungsprozessen, bereitgestellt, umfassend einen Behälter zur Lagerung des Betriebsmittels, vorzugsweise einen Flüssigkeitstank, und eine Entnahmeeinrichtung. Die Entnahmeeinrichtung umfasst dabei eine Entnahmeleitung sowie eine Förderpumpe zur Förderung des Betriebsmittels aus dem Behälter über die Entnahmeleitung. Weiterhin umfasst die Vorrichtung erfindungsgemäß eine Strömungsmaschine, die ausgebildet ist, bei deren Betrieb einen Volumenstrom des Betriebsmittels im Inneren des Behälters zu erzeugen, wobei die Förderpumpe und die Strömungsmaschine unabhängig voneinander betreibbar sind.

In diesem Zusammenhang sollen auch alle in diesem Dokument im Zuge der Vorrichtung mit Heizeinrichtung ausgeführten Aspekte auch im Zusammenhang mit der eben beschriebenen Vorrichtung ohne Heizeinrichtung offenbart und beanspruchbar sein, d.h. insbesondere unabhängig davon, ob die Vorrichtung mit oder ohne Heizeinrichtung ausgeführt ist. Beispielweise kann die eben erwähnte Vorrichtung ohne Heizeinrichtung somit zusätzlich auch die Merkmale der Ansprüche 4 bis15 oder eine Kombination dergleichen umfassen.

Ferner wird erfindungsgemäß ein Kraftfahrzeug, vorzugsweise Nutzfahrzeug, bereitgestellt, das eine Vorrichtung, wie in diesem Dokument beschrieben, aufweist.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben Es zeigen:
- Figur 1:: eine schematische Darstellung einer nicht erfindungsgemäßen Vorrichtung zur Lagerung und Bereitstellung eines Betriebsmittels gemäß einer ersten Ausführungsform der Erfindung;
- Figur 2:: eine schematische Darstellung einer nicht erfindungsgemäßen Vorrichtung zur Lagerung und Bereitstellung eines Betriebsmittels gemäß einer weiteren Ausführungsform der Erfindung; und
- Figur 3:: eine schematische Darstellung einer Vorrichtung zur Lagerung und Bereitstellung eines Betriebsmittels gemäß einer dritten Ausführungsform der Erfindung;

Gleiche oder funktional äquivalente Elemente sind in allen Figuren mit denselben Bezugszeichen beschrieben und zum Teil nicht gesondert beschrieben.

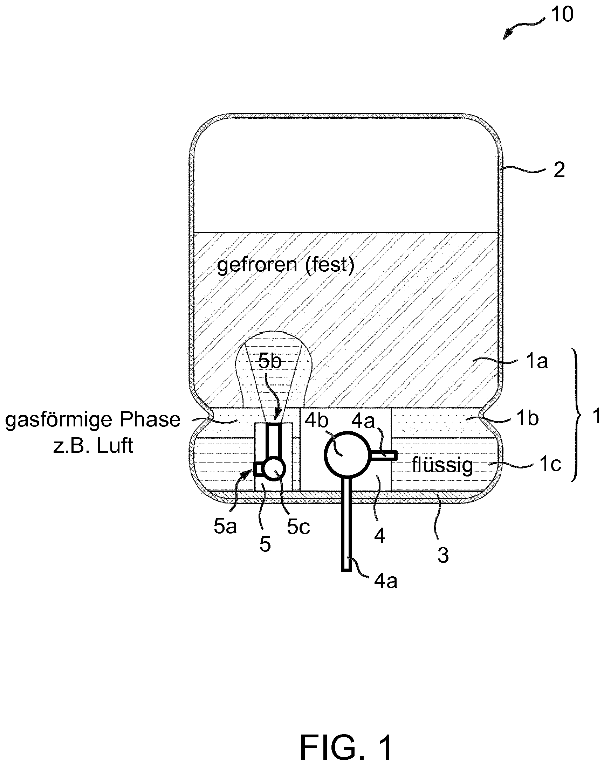

Figur 1 zeigt schematisch einen nicht erfindungsgemäßen Behälter 2 zur Lagerung eines Betriebsmittels 1 eines Kraftfahrzeugs, beispielsweise zur Lagerung einer wässrigen Harnstofflösung. Der Behälter umfasst dabei eine einen Behälterinnenraum umgebende Wandung. Ferner umfasst der Behälter 2 eine im unteren Bereich des Behälters 2 angeordnete Entnahmeeinrichtung 4, um das im Behälterinnenraum gelagerte Betriebsmittel 1 zu weiteren - nicht näher gezeigten - Komponenten, beispielsweise einer Abgasleitung und/oder einem SCR-Katalysator, zu fördern. Die Entnahmeeinrichtung 4 weist hierbei eine Entnahmeleitung 4a auf, deren erstes Ende im Inneren des Behälters 2 endet und deren zweites Ende mit den weiteren nicht gezeigten Komponenten verbunden ist. Zur Förderung des Betriebsmittels 1 aus dem Behälter 2 über die Entnahmeleitung 4a umfasst die Entnahmeeinrichtung 4 ferner eine Förderpumpe 4b, beispielsweise eine Impellerpumpe.

Fällt die Temperatur des Betriebsmittels unter dessen Gefrierpunkt, gefriert es im Tank. Bei einer Harnstofflösung ist dies beispielsweise der Fall unterhalb von -11 °C. Um möglichst in allen Betriebszuständen eine Entnahme von flüssigen Betriebsmittel 1c zu garantieren, insbesondere bei Fahrtbeginn und Temperaturen unterhalb des Gefrierpunkts des Betriebsmittels, ist im Bereich des Behälterbodens zudem eine Heizeinrichtung 3, beispielweise in Form eines stromdurchflossenen elektrischen Heizelements, zur Erwärmung des Betriebsmittels 1 angebracht. Die Heizeinrichtung 3 sorgt dafür, dass das gefrorene Betriebsmittel 1 zunächst im unteren Bereich des Behälters 2 aufgetaut wird oder das Betriebsmittel 1 im flüssigen Zustand 1c gehalten wird. Nachdem gefrorenes Betriebsmittels durch die Heizeinrichtung zunächst im an die Heizeinrichtung angrenzenden bzw. benachbarten Bereich aufgetaut wird, kann zwischen dem Bereich mit flüssigen Betriebsmittel 1c und dem Bereich mit gefrorenen Betriebsmittel 1a eine weitere gasförmige Schicht bzw. Phase 1b, beispielweise Luft, gasförmiges Betriebsmittel und/oder Vakuum, vorliegen bzw. entstehen, die aufgrund ihrer isolierenden Wirkung die Wärmeleitung und damit das weitere Auftauverhalten behindert.

Um auf vorteilhafte Weise die von der Heizeinrichtung 3 erzeugte Wärme im Behälter 2 zu verteilen und so ein schnelles Auftauen des gefrorenen Betriebsmittels 1a im Behälter 2 zu ermöglichen, ist erfindungsgemäß zusätzlich eine Strömungsmaschine 5 im Behälter 2 angeordnet, die einen gerichteten Strahl aus flüssigen und vorzugsweise warmen oder erwärmtes Betriebsmittel 1c aus der Umgebung der Heizeinrichtung 3 zur gefrorenen Phase 1a leitet. Dieser Volumenstrom an Betriebsmittel ist dabei in der Lage die isolierende gasförmige Phase 1b zu durchdringen. In der vorliegenden Ausführungsform umfasst die Strömungsmaschine 5 dabei eine Eingangsöffnung 5a zum Zuführen von flüssigem Betriebsmittel 1c, eine Ausgangsöffnung 5b zum Abgeben des Betriebsmittels 1 und eine Pumpe 5c zum Transport des Betriebsmittels 1 von der Eingangsöffnung 5a zur Ausgangsöffnung 5b. Der Vorzug dieser zusätzlichen Strömungsmaschine 5 besteht darin, dass diese unabhängig von der Förderpumpe 4b betreibbar ist und so bereits ein Auftauen des gefrorenen Betriebsmittels 1a vor einer tatsächlichen Entnahme erreicht werden kann.

Neben den explizit dargestellten Bauteilen kann die Vorrichtung 10 zusätzlich noch ein oder mehrere der folgenden Bauteile umfassen: einen Anschluss zum Befüllen mit Betriebsmittel, eine Schwallwand zur Dämpfung eventuell auftretender Wellen des Betriebsmittels, ein Sichtfenster zur optischen Füllstandskontrolle und/oder eine Lüftungsöffnung zur Be- oder Entlüftung.

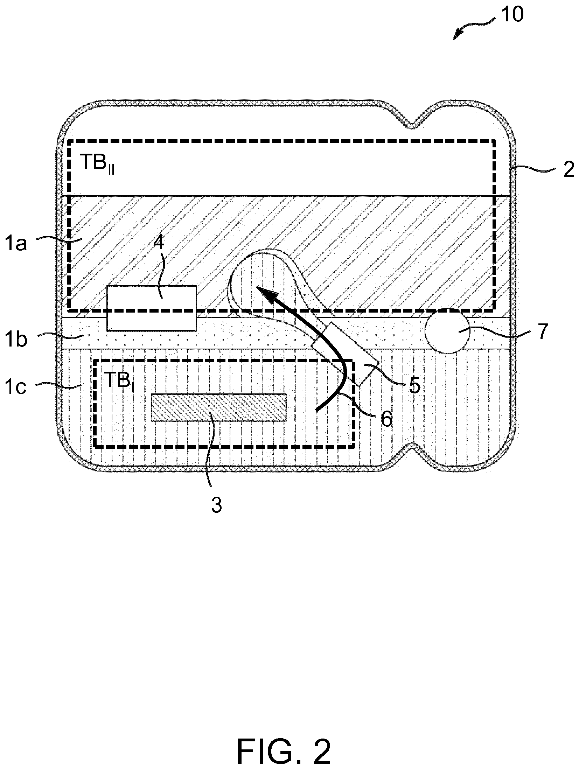

Figur 2 zeigt eine schematische Darstellung der Vorrichtung 10 zur Lagerung und Bereitstellung eines Betriebsmittels 1 gemäß einer weiteren nicht erfindungsgemäßen Ausführungsform der Erfindung. Analog zu der in Figur 1 gezeigten Ausführungsform sind auch hier im Behälter 2 eine Heizeinrichtung 3, eine Entnahmeeinrichtung 4 und eine Strömungsmaschine 5 vorhanden. Während diese Bauteile in Figur 1 vor allem im Bereich des Behälterbodens angeordnet sind, sind diese im Ausführungsbeispiel der Figur 2 beabstandet zum Behälterboden angebracht, erfüllen jedoch jeweils dieselben Funktionen.

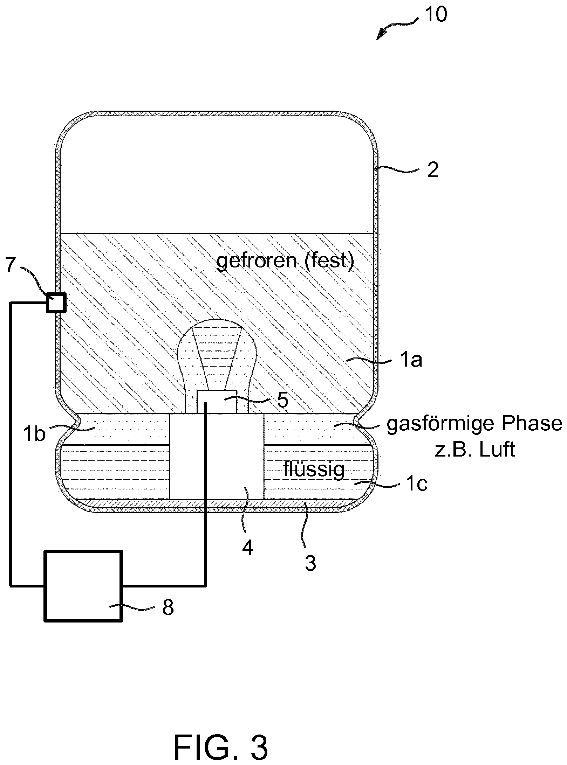

Gemäß einem Aspekt der Erfindung ist in Figur 2 ferner ein ersten Teilbereich TB_{I} markiert, der angrenzend zur Heizeinrichtung 3 angeordnet ist, sowie ein zweiter Teilbereich TB_{II}, der weiter entfernt von der Heizeinrichtung 3 als der erste Teilbereich TB_{I} angeordnet ist. Dabei liegt das Betriebsmittel 1 im ersten Teilbereich TB_{I} in einem flüssigen Aggregatzustand 1c und das Betriebsmittel 1 im zweiten Teilbereich TB_{II} zumindest teilweise in einem gefrorenem Zustand 1a vor. Wie in Figur 2 zu sehen, ist die Strömungsmaschine 5 derart ausgebildet, einen Volumenstrom 6 des Betriebsmittels 1 vom ersten Teilbereich TB_{I} zum zweiten Teilbereich TB_{II} zu erzeugen. Auf diese Weise wird flüssiges Betriebsmittel 1c aus der Umgebung der Heizeinrichtung 3 zum Ort der Eisphase 1a geleitet, um dort den Auftauvorgang zu beschleunigen. Ferner umfasst die in Figur 2 gezeigte Ausführungsform eine im Tankinneren angeordnete Sensoreinrichtung 7 zum Erfassen der Harnstoff-Konzentration des Betriebsmittels 1. Auf der Grundlage der von dieser Sensoreinrichtung 7 erfassten Werte kann beispielsweise die zur Abgasnachbehandlung entnommene Menge an wässriger Harnstofflösung gesteuert werden. Figur 3 zeigt eine Ausführungsform der erfindungsgemäßen Vorrichtung 10. Im Gegensatz zu den bisherigen Ausführungsformen weist diese eine zusätzliche Steuereinrichtung 8 auf, die ausgebildet ist, den von der Strömungsmaschine 5 erzeugten Volumenstrom des Betriebsmittels 1 auf Basis von einer Sensoreinrichtung 7 zum Erfassen einer Temperatur des Betriebsmittels 1 zu steuern. Alternativ kann es jedoch auch in einer nicht erfindungsgemäßen Ausführungsform möglich sein, den von der Strömungsmaschine 5 erzeugten Volumenstrom des Betriebsmittels 1 unabhängig von den von einer Sensoreinrichtung 7 erfassten Werten zu steuern, beispielsweise mittels geeigneter manueller oder automatischer Stelleinrichtungen. Im vorliegenden Ausführungsbeispiel wird der Volumenstrom in Abhängigkeit von der von der Sensoreinrichtung 7 erfassten Betriebsmitteltemperatur gesteuert. Hierbei ist vorgesehen, dass der Volumenstrom proportional zu der von der Sensoreinrichtung 7 erfassten Betriebsmitteltemperatur gesteuert wird: je niedriger die erfasste Betriebsmitteltemperatur, desto höher wird dabei der von der Strömungsmaschine 5 erzeugten Volumenstrom eingestellt, um so das Abtauen zu beschleunigen.

Des Weiteren sind im Ausführungsbeispiel der Figur 3 die Strömungsmaschine 5 und die Entnahmeeinrichtung 4 als eine gemeinsame Baugruppe ausgebildet. Es handelt sich im vorliegenden Fall somit nicht um zwei separate, d.h. räumlich getrennte, Bauteile, sondern die Strömungsmaschine 5 und die Entnahmeeinrichtung 4 sind fest miteinander verbunden. Zudem können die beiden Bauteile auch von einem gemeinsamen Gehäuse umhaust werden.

### Bezugszeichenliste

- 1: Betriebsmittel
- 1a: Gefrorenes (festes) Betriebsmittel
- 1b: Gasförmige Phase
- 1c: Flüssiges Betriebsmittel
- 2: Behälter
- 3: Heizeinrichtung
- 4: Entnahmeeinrichtung
- 4a: Entnahmeleitung
- 4b: Förderpumpe
- 5: Strömungsmaschine
- 5a: Eingangsöffnung
- 5b: Ausgangsöffnung
- 5c: Pumpe
- 6: Volumenstrom des Betriebsmittels
- 7: Sensoreinrichtung
- 8: Steuereinrichtung
- 10: Vorrichtung zur Lagerung und Bereitstellung eines Betriebsmittels
- TB_{I}: Erster Teilbereich
- TB_{II}: Zweiten Teilbereich

## Patentansprüche

1. Vorrichtung (10) zur Lagerung und Bereitstellung eines Betriebsmittels (1) eines Kraftfahrzeugs, vorzugsweise zur Lagerung und Bereitstellung einer Flüssigkeit zur Abgasnachbehandlung, umfassend:
a) einen Behälter (2) zur Lagerung des Betriebsmittels, vorzugsweise einen Flüssigkeitstank,
b) eine Heizeinrichtung (3) zum Erwärmen des Betriebsmittels (1),
c) eine Entnahmeeinrichtung (4), welche in einer vorbestimmten Einbauposition des Behälters (2) in einem unteren Drittel des Behälters (2) angeordnet ist, umfassend
c1) eine Entnahmeleitung (4a) und
c2) eine Förderpumpe (4b) zur Förderung des Betriebsmittels (1) aus dem Behälter (2) über die Entnahmeleitung (4a), und
d) eine Strömungsmaschine (5), die ausgebildet ist, bei deren Betrieb einen Volumenstrom (6) des Betriebsmittels (1) im Inneren des Behälters (2) zu erzeugen, wobei die Förderpumpe (4b) und die Strömungsmaschine (5) unabhängig voneinander betreibbar sind,
e) eine Sensoreinrichtung (7) zum Erfassen der Temperatur des Betriebsmittels; und
f) eine Steuereinrichtung (8), die ausgebildet ist, den von der Strömungsmaschine (5) erzeugten Volumenstrom (6) des Betriebsmittels (1) auf Basis von der Sensoreinrichtung (7) erfassten Werte zu steuern;
wobei der Behälter (2) einen ersten Teilbereich (TB_{I}) aufweist, der vorzugsweise angrenzend und/oder benachbart zur Heizeinrichtung (3) angeordnet ist, und mindestens einen zweiten Teilbereich (TB_{II}) aufweist, der weiter entfernt von der Heizeinrichtung (3) als der erste Teilbereich (TB_{I}) angeordnet ist, wobei die Strömungsmaschine (5) derart ausgebildet ist, dass ein Volumenstrom (6) des Betriebsmittels (1) vom ersten (TB_{I}) zum zweiten Teilbereich (TB_{II}) erzeugbar ist,
**dadurch gekennzeichnet, dass** die Vorrichtung (10) derart ausgebildet ist, dass ein Volumenstrom (6) des Betriebsmittels (1) mittels der Strömungsmaschine (5) vom ersten (TB_{I}) zum zweiten Teilbereich (TB_{II}) erzeugt wird, wenn das Betriebsmittel (1) im ersten Teilbereich (TB_{I}) in einem flüssigen Aggregatzustand (1c) und das Betriebsmittel (1) im zweiten Teilbereich (TB_{II}) zumindest teilweise in einem gefrorenem Zustand (1a) vorliegt; wobei der Volumenstrom proportional zu der von der Sensoreinrichtung (7) erfassten Betriebsmitteltemperatur ist: je niedriger die erfasste Betriebsmitteltemperatur, desto höher wird dabei der von der Strömungsmaschine erzeugten Volumenstrom eingestellt, um so das Abtauen zu beschleunigen.

2. Vorrichtung (10) nach einem der vorherigen Ansprüche, **dadurch gekennzeichnet, dass** die Strömungsmaschine (5)
a) bei Erfüllung einer Aktivierungsbedingung eingeschaltet wird, wobei die Aktivierungsbedingung dann erfüllt ist, wenn das Betriebsmittel (1) im Behälter (2) zumindest teilweise gefroren (1a) ist und/oder
b) bei Erfüllung einer Deaktivierungsbedingung abgeschaltet wird, wobei die Deaktivierungsbedingung dann erfüllt ist, wenn das Betriebsmittel (1) im Behälter (2) nicht mehr in einem gefrorenem Zustand (1a) vorliegt.

3. Vorrichtung (10) nach Anspruch 2, **dadurch gekennzeichnet, dass** die Aktivierungsbedingung und/oder Deaktivierungsbedingung vom Wert eines Parameters, aus dem eine Temperatur und/oder der Aggregatzustand des Betriebsmittels ableitbar ist, abhängt.

4. Vorrichtung (10) nach einem der vorherigen Ansprüche, **dadurch gekennzeichnet, dass** die Vorrichtung (10)
a) eine Sensoreinrichtung (7) zum Erfassen des Brechungsindex des Betriebsmittels und/oder
b) eine Sensoreinrichtung (7) zum Erfassen der Leitfähigkeit des Betriebsmittels und/oder
c) eine Sensoreinrichtung (7) zum Erfassen der Harnstoff-Konzentration des Betriebsmittels und/oder
d) eine Sensoreinrichtung (7) zum Erfassen des Füllstands des Betriebsmittels im Behälter (2)
umfasst.

5. Vorrichtung (10) nach Anspruch 4, **dadurch gekennzeichnet, dass** eine oder mehrere Sensoreinrichtungen (7) in die Entnahmeeinrichtung (4), in die Förderpumpe (4b) und/oder in die Strömungsmaschine (5) integriert ist/sind.

6. Vorrichtung (10) nach Anspruch 4 oder 5, **dadurch gekennzeichnet, dass** die Steuereinrichtung (8) ausgebildet ist, den von der Strömungsmaschine (5) erzeugten Volumenstrom (6) des Betriebsmittels (1) auf Basis von den Sensoreinrichtungen (7) erfassten Werte zu steuern.

7. Vorrichtung (10) nach einem der vorherigen Ansprüche, **dadurch gekennzeichnet, dass** die Heizeinrichtung (3) in der vorbestimmten Einbauposition des Behälters (2) in einem unteren Drittel, vorzugsweise an der geodätisch tiefsten Stelle, des Behälters (2) angeordnet ist.

8. Vorrichtung (10) nach Anspruch 7, **dadurch gekennzeichnet, dass** der von der Strömungsmaschine (5) erzeugte Volumenstrom (6) des Betriebsmittels (1) im Wesentlichen entgegen der Schwerkraftrichtung orientiert ist.

9. Vorrichtung (10) nach einem der vorherigen Ansprüche, **dadurch gekennzeichnet, dass** die Strömungsmaschine (5) folgende Bauteile umfasst:
d1) eine im Inneren des Behälters (2) angeordnete Eingangsöffnung (5a) zum Zuführen des Betriebsmittels (1),
d2) eine im Inneren des Behälters (2) angeordnete Ausgangsöffnung (5b) zum Abgeben des Betriebsmittels (1), und
d3) eine Pumpe (5c) zum Transport des Betriebsmittels (1) von der Eingangsöffnung (5a) zur Ausgangsöffnung (5b).

10. Vorrichtung (10) nach Anspruch 9, **dadurch gekennzeichnet,**
a) **dass** die Ausgangsöffnung (5b) als Düse ausgebildet ist und/oder
b) **dass** die Eingangsöffnung (5a) benachbart, vorzugsweise weniger als 10 cm beabstandet, zur Heizeinrichtung (3) angeordnet ist und/oder
c) **dass** die Pumpe (5c) zum Transport des Betriebsmittels (1) im Inneren oder außerhalb des Behälters (2) angeordnet ist.

11. Vorrichtung (10) nach einem der Ansprüche 1 bis 8, **dadurch gekennzeichnet, dass** die, vorzugsweise im Inneren des Behälters (2) angeordnete, Strömungsmaschine (5)
d1) ein Rotorblatt und/oder,
d2) einen Flügel und/oder,
d3) eine Schaufel und/oder,
d4) ein Rührwerk und/oder
umfasst.

12. Vorrichtung (10) nach einem der vorherigen Ansprüche, **dadurch gekennzeichnet, dass** die Strömungsmaschine (5) derart ausgelegt und angeordnet ist, dass durch ihren Betrieb eine im Wesentlichen homogene Konzentrationsverteilung des, vorzugsweise flüssigen, Betriebsmittels (1) im Behälter (2) einstellbar ist.

13. Vorrichtung (10) nach einem der vorherigen Ansprüche, **dadurch gekennzeichnet, dass** die Strömungsmaschine (5) und die Entnahmeeinrichtung (4) als gemeinsame Baugruppe ausgebildet sind.

14. Vorrichtung (10) nach einem der vorherigen Ansprüche, **dadurch gekennzeichnet, dass** die Heizeinrichtung (3)
a) ein elektrisches Heizelement und/oder
b) einen Wärmetauscher, der von einem Wärmemedium durchströmbar ist und in Fluidverbindung mit einer Wärmequelle steht, die ausgebildet ist, das Wärmemedium außerhalb des Behälters (2) zu erwärmen,
umfasst.

15. Kraftfahrzeug, vorzugsweise Nutzfahrzeug, aufweisend eine Vorrichtung (10) nach einem der vorherigen Ansprüche.

## Claims

1. Apparatus (10) for storing and providing a working medium (1) of a motor vehicle, preferably for storing and providing a liquid for exhaust gas aftertreatment, comprising:
a) a container (2) for storing the working medium, preferably a liquid tank,
b) a heating device (3) for heating the working medium (1),
c) a discharge device (4), which is arranged in a predetermined installation position of the container (2) in a lower third of the container (2), comprising
c1) a discharge duct (4a), and
c2) a discharge pump (4b) for discharging the working medium (1) from the container (2) via the discharge duct (4a), and
d) a turbomachine (5), which is configured to generate a volume flow (6) of the working medium (1) in the interior of the container (2) during its operation, wherein the discharge pump (4b) and the turbomachine (5) can be operated independently of each other,
e) sensor device (7) for detecting the temperature of the working medium; and
f) control device (8) configured to control the volume flow (6) of the working medium (1) generated by the turbomachine (5) on the basis of values detected by the sensor device (7);
wherein the container (2) comprises a first portion (TB_{I}), which is preferably arranged adjacent and/or adjacent to the heating device (3), and at least one second portion (TB_{II}), which is arranged further away from the heating device (3) than the first portion (TB_{I}), wherein the turbomachine (5) is configured such that a volume flow (6) of the working medium (1) can be generated from the first (TB_{I}) to the second portion (TB_{II}), **characterized in that** the apparatus (10) is configured in such that a volume flow (6) of the working medium (1) is generated by the turbomachine (5) from the first (TB_{I}) to the second portion (TB_{II}) when the working medium (1) in the first portion (TB_{I}) is in a liquid aggregate state (1c) and the working medium (1) in the second portion (TB_{II}) is at least partially in a frozen state (1a);
wherein the volumetric flow is proportional to the working medium temperature detected by the sensor device (7): the lower the detected working fluid temperature, the higher the volume flow generated by the turbomachine is set, in order to accelerate thawing.

2. Apparatus (10) according to any one of the preceding claims, **characterized in that** the turbomachine (5)
a) is switched on when an activation condition is fulfilled, the activation condition being fulfilled when the working medium (1) in the container (2) is at least partially frozen (1a) and/or
b) is switched off when a deactivation condition is fulfilled, the deactivation condition being fulfilled when the working medium (1) in the container (2) is no longer in a frozen state (1a).

3. Apparatus (10) according to claim 2, **characterized in that** the activation condition and/or deactivation condition depends on the value of a parameter from which a temperature and/or the aggregate state of the working medium is derivable.

4. Apparatus (10) according to any one of the preceding claims, **characterized in that** the apparatus (10) comprises
a) a sensor device (7) for detecting the refractive index of the working medium and/or
b) a sensor device (7) for detecting the conductivity of the working medium and/or
c) a sensor device (7) for detecting the urea concentration of the working fluid and/or
d) a sensor device (7) for detecting the filling level of the working fluid in the container (2).

5. Apparatus (10) according to claim 4, **characterized in that** one or more sensor devices (7) is/are integrated in the discharge device (4), in the discharge pump (4b) and/or in the turbomachine (5).

6. Apparatus (10) according to claim 4 or 5, **characterized in that** the control device (8) is configured to control the volume flow (6) of the working medium (1) generated by the turbomachine (5) on the basis of values detected by the sensor devices (7).

7. Apparatus (10) according to any one of the preceding claims, **characterized in that** the heating device (3) is arranged in the predetermined installation position of the container (2) in a lower third, preferably at the geodetically lowest point, of the container (2).

8. Apparatus (10) according to claim 7, **characterized in that** the volume flow (6) of the working medium (1) generated by the turbomachine (5) is oriented essentially opposite to the direction of gravity.

9. Apparatus (10) according to any one of the preceding claims, **characterized in that** the turbomachine (5) comprises the following components:
d1) an inlet opening (5a) arranged inside the container (2) for feeding the working medium (1),
d2) an outlet opening (5b) arranged inside the container (2) for discharging the working medium (1), and
d3) a pump (5c) for transporting the working medium (1) from the inlet opening (5a) to the outlet opening (5b).

10. Apparatus (10) according to claim 9, **characterized in that,**
a) the outlet opening (5b) is configured as a nozzle and/or
b) the inlet opening (5a) is arranged adjacent to, preferably less than 10 cm apart from, the heating device (3) and/or
c) the pump (5c) for transporting the working medium (1) is arranged inside or outside the container (2).

11. Apparatus (10) according to any one of claims 1 to 8, **characterized in that** the turbomachine (5), which is preferably arranged inside the container (2), comprises
d1) a rotor blade and/or,
d2) a wing and/or,
d3) a paddle and/or,
d4) a stirrer and/or

12. Apparatus (10) according to any one of the preceding claims, **characterized in that** the turbomachine (5) is configured and arranged such that, by its operation, a substantially homogeneous concentration distribution of the, preferably liquid, working medium (1) in the container (2) is adjustable.

13. Apparatus (10) according to any one of the preceding claims, **characterized in that** the turbomachine (5) and the discharge device (4) are configured as a single unit.

14. Apparatus (10) according to any one of the preceding claims, **characterized in that** the heating device (3) comprises
a) an electric heating element and/or
b) a heat exchanger through which a heat medium can flow and which is in fluid communication with a heat source designed to heat the heat medium outside the container (2).

15. Motor vehicle, preferably commercial vehicle, comprising an apparatus (10) according to any one of the preceding claims.

## Revendications

1. Dispositif (10) pour le stockage et la fourniture d'un moyen d'exploitation (1) d'un véhicule automobile, de préférence pour le stockage et la fourniture d'un liquide pour le post-traitement de gaz d'échappement, comprenant :
a) un récipient (2) pour le stockage du moyen d'exploitation, de préférence un réservoir de liquide,
b) un appareil de chauffage (3) pour chauffer le moyen d'exploitation (1),
c) un appareil de prélèvement (4), qui est agencé dans une position de montage prédéterminée du récipient (2) dans un tiers inférieur du récipient (2), comprenant
c1) une conduite de prélèvement (4a) et
c2) une pompe d'acheminement (4b) pour acheminer le moyen d'exploitation (1) à partir du récipient (2) par l'intermédiaire de la conduite de prélèvement (4a), et
d) une machine d'écoulement (5), qui est configurée pour générer, lors de son exploitation, un courant volumique (6) du moyen d'exploitation (1) à l'intérieur du récipient (2), la pompe d'acheminement (4b) et la machine d'écoulement (5) pouvant être exploitées indépendamment l'une de l'autre,
e) un appareil capteur (7) pour détecter la température du moyen d'exploitation ; et
f) un appareil de commande (8), qui est configuré pour commander le débit volumique (6) du moyen d'exploitation (1) généré par la machine d'écoulement (5) sur la base de valeurs détectées par l'appareil capteur (7) ;
le récipient (2) présentant une première zone partielle (TB_{I}), qui est de préférence agencée adjacente à et/ou au voisinage de l'appareil de chauffage (3), et au moins une deuxième zone partielle (TB_{II}), qui est agencée plus éloignée de l'appareil de chauffage (3) que la première zone partielle (TB_{I}), la machine d'écoulement (5) étant configurée de telle sorte qu'un courant volumique (6) du moyen d'exploitation (1) peut être généré de la première (TB_{I}) vers la deuxième zone partielle (TB_{II}),
**caractérisé en ce que** le dispositif (10) est configuré de telle sorte qu'un courant volumique (6) du moyen d'exploitation (1) est généré au moyen de la machine d'écoulement (5) de la première (TB_{I}) vers la deuxième zone partielle (TB_{II}) lorsque le moyen d'exploitation (1) se présente dans un état physique liquide (1c) dans la première zone partielle (TB_{I}) et le moyen d'exploitation (1) se présente au moins partiellement dans un état congelé (1a) dans la deuxième zone partielle (TB_{II}) ; le courant volumique étant proportionnel à la température du moyen d'exploitation détectée par l'appareil capteur (7) : plus la température du moyen d'exploitation détectée est basse, plus le courant volumique généré par la machine d'écoulement est ajusté élevé, afin d'accélérer le dégivrage.

2. Dispositif (10) selon l'une quelconque des revendications précédentes, **caractérisé en ce que** la machine d'écoulement (5)
a) est mise en marche lorsqu'une condition d'activation est remplie, la condition d'activation étant remplie lorsque le moyen d'exploitation (1) dans le récipient (2) est au moins partiellement congelé (1a) et/ou
b) est éteinte lorsqu'une condition de désactivation est remplie, la condition de désactivation étant remplie lorsque le moyen d'exploitation (1) dans le récipient (2) ne se présente plus à un état congelé (1a).

3. Dispositif (10) selon la revendication 2, **caractérisé en ce que** la condition d'activation et/ou la condition de désactivation dépendent de la valeur d'un paramètre à partir duquel une température et/ou l'état physique du moyen d'exploitation peuvent être déduits.

4. Dispositif (10) selon l'une quelconque des revendications précédentes, **caractérisé en ce que** le dispositif (10) comprend
a) un appareil capteur (7) pour détecter l'indice de réfraction du moyen d'exploitation et/ou
b) un appareil capteur (7) pour détecter la conductivité du moyen d'exploitation et/ou
c) un appareil capteur (7) pour détecter la concentration en urée du moyen d'exploitation et/ou
d) un appareil capteur (7) pour détecter le niveau de remplissage du moyen d'exploitation dans le récipient (2) .

5. Dispositif (10) selon la revendication 4, **caractérisé en ce qu'**un ou plusieurs appareils capteurs (7) sont intégrés dans l'appareil de prélèvement (4), dans la pompe d'acheminement (4b) et/ou dans la machine d'écoulement (5).

6. Dispositif (10) selon la revendication 4 ou 5, **caractérisé en ce que** l'appareil de commande (8) est configuré pour commander le courant volumique (6) du moyen d'exploitation (1) généré par la machine d'écoulement (5) sur la base de valeurs détectées par les appareils capteurs (7).

7. Dispositif (10) selon l'une quelconque des revendications précédentes, **caractérisé en ce que** l'appareil de chauffage (3) est agencé dans la position de montage prédéterminée du récipient (2) dans un tiers inférieur, de préférence à l'emplacement le plus bas géodésiquement, du récipient (2).

8. Dispositif (10) selon la revendication 7, **caractérisé en ce que** le courant volumique (6) du moyen d'exploitation (1) généré par la machine d'écoulement (5) est orienté essentiellement à l'encontre de la direction de la force de pesanteur.

9. Dispositif (10) selon l'une quelconque des revendications précédentes, **caractérisé en ce que** la machine d'écoulement (5) comprend les composants suivants :
d1) une ouverture d'entrée (5a) agencée à l'intérieur du récipient (2) pour l'amenée du moyen d'exploitation (1),
d2) une ouverture de sortie (5b) agencée à l'intérieur du récipient (2) pour l'évacuation du moyen d'exploitation (1), et
d3) une pompe (5c) pour le transport du moyen d'exploitation (1) de l'ouverture d'entrée (5a) à l'ouverture de sortie (5b).

10. Dispositif (10) selon la revendication 9, **caractérisé en ce que**
a) l'ouverture de sortie (5b) est configurée sous forme de buse et/ou
b) l'ouverture d'entrée (5a) est agencée au voisinage, de préférence espacée de moins de 10 cm, de l'appareil de chauffage (3) et/ou
c) la pompe (5c) pour le transport du moyen d'exploitation (1) est agencée à l'intérieur ou à l'extérieur du récipient (2).

11. Dispositif (10) selon l'une quelconque des revendications 1 à 8, **caractérisé en ce que** la machine d'écoulement (5), agencée de préférence à l'intérieur du récipient (2), comprend
d1) une pale de rotor et/ou
d2) une aile et/ou
d3) une aube et/ou
d4) un mécanisme d'agitation.

12. Dispositif (10) selon l'une quelconque des revendications précédentes, **caractérisé en ce que** la machine d'écoulement (5) est conçue et agencée de telle sorte que son exploitation permet d'ajuster une répartition de concentration essentiellement homogène du moyen d'exploitation (1), de préférence liquide, dans le récipient (2).

13. Dispositif (10) selon l'une quelconque des revendications précédentes, **caractérisé en ce que** la machine d'écoulement (5) et l'appareil de prélèvement (4) sont configurés sous forme de sous-ensemble commun.

14. Dispositif (10) selon l'une quelconque des revendications précédentes, **caractérisé en ce que** l'appareil de chauffage (3) comprend
a) un élément de chauffage électrique et/ou
b) un échangeur de chaleur qui peut être traversé par un milieu chaud et qui est en liaison fluidique avec une source de chaleur qui est configurée pour chauffer le milieu chaud à l'extérieur du récipient (2).

15. Véhicule automobile, de préférence véhicule utilitaire, présentant un dispositif (10) selon l'une quelconque des revendications précédentes.
